# EUROPEAN PATENT SPECIFICATION

(11) **EP 4 201 761 B1**
(45) Date of publication and mention of the grant of the patent: **27.08.2025**
(21) Application number: 22212698.9
(22) Date of filing: 12.12.2022
(51) Int. Cl.: B60T 8/17, B60W 50/14, B62D 5/04, B62J 45/411, B62J 45/422, B62K 23/04, B60W 40/08, B60W 50/08

(54) **GRIP GRASPING STATE DETERMINATION DEVICE, DETERMINATION METHOD, AND SYSTEM INCLUDING DETERMINATION DEVICE**
VORRICHTUNG ZUR BESTIMMUNG DES GREIFZUSTANDS EINES GRIFFS, BESTIMMUNGSVERFAHREN UND SYSTEM MIT DER BESTIMMUNGSVORRICHTUNG
DISPOSITIF DE DÉTERMINATION D'ÉTAT DE PRÉHENSION DE PRÉHENSION, PROCÉDÉ DE DÉTERMINATION ET SYSTÈME COMPRENANT UN DISPOSITIF DE DÉTERMINATION

(30) Priority: 27.12.2021 JP 2021211775
(43) Date of publication of application: 28.06.2023
(73) Proprietor: Robert Bosch GmbH, 70442 Stuttgart (DE)
(72) Inventor: Dumitru, Traian, Yokohama-shi, Kanagawa, 2248501 (JP); Burton, Edward, Clayton, Victoria, 3168 (AU)

(56) References cited:
- EP-A1- 3 613 645
- WO-A1-2019/106073
- DE-A1- 102012 221 615
- DE-A1- 102020 203 457
- DE-T5- 112019 007 123
- US-A1- 2019 135 372

## Description

### BACKGROUND OF THE INVENTION

### 1. Field of the Invention

The present invention relates to: a determination device and a determination method for determining a grasping state of a grip that is attached to a driving operation handlebar for a driver who operates a two-wheeled motor vehicle; and a warning system, a power steering control system, and an automated emergency brake control system including the determination device.

### 2. Description of the Background Art

As a technique that is applied to a two-wheeled motor vehicle, the following electronic control unit has been known. A pressure sensor that detects a pressure is provided to a grip, and the electronic control unit includes a control section that calculates any of a request value of drive power of the two-wheeled motor vehicle, a request value of a clutch connection state, and a request value of an operating pressure of a brake on the basis of the pressure detected by the pressure sensor and controls respective one of the drive power, the clutch connection state, and the operating pressure of the brake.

According to this electronic control unit, the drive power or the like is controlled on the basis of a calculation result of the respective request value. Thus, a driver can control the desired drive power or the like without removing his/her fingers from the grip (for example, see JP2020-040542A).

Patent document DE 11 2019 007123 T5 provides a driving assistance device for a saddle type vehicle capable of determining a driving posture of a driver from a sensor mounted on the vehicle and operating an automatic control.

Patent document DE 10 2020 203457 A1 provides an automatic control device for a semi-trailer vehicle to prevent the driver's posture from being disturbed.

### SUMMARY OF THE INVENTION

However, in the case where the grip grasping state of the driver is detected by the pressure sensor, the accurate grasping state by the driver may not be determined depending on an arrangement position of the pressure sensor. That is, a pressure detection value may vary according to the driver's grip grasping habit or a way the driver grasps the grip.

In addition, vibration generated by an engine may affect the detection value by the pressure sensor.

In order to solve these problems, it can be considered to arrange a plural pressure sensors to the grip. However, material cost and manufacturing cost for arranging the plural pressure sensors are increased as the number of the plural pressure sensors is increased.

The present invention has been made with the above-described problems as the background, as defined by independent claims 1 and 9, and therefore provides a determination device and a determination method capable of minimizing a possibility of an erroneous determination, which is caused by a way a driver grasps a grip and vibration of a vehicle, and accurately determining a grip grasping state of the driver. The present invention also provides a warning system, a power steering control system, and an automated emergency brake control system including the determination device.

A grip grasping state determination device according to the present invention has: a grip sensor that is attached to a driving operation handlebar for a two-wheeled motor vehicle and detects vibration of a grip grasped by a driver of the two-wheeled motor vehicle; a joint sensor that detects vibration of a connection section between the handlebar for the driver and a steering column supporting the handlebar for the driver; a storage section that stores a vibration pattern according to a grasping state of the grip by the driver; and a determination section that determines the grasping state of the grip by the driver on the basis of the vibration detected by the grip sensor and the vibration pattern, and the vibration detected by the joint sensor as a reference value.

A warning system according to the present invention includes a warning transmitter that transmits a warning to a driver according to a determination result by a determination section.

A power steering control system according to the present invention includes a steering controller that changes steering damping control at the time of executing automated emergency brake control for a two-wheeled motor vehicle according to a determination result by a determination section. An automated emergency brake control system according to the present invention includes an automated brake controller that changes brake control at the time of executing automated emergency brake control for a two-wheeled motor vehicle according to a determination result by a determination section.

A grip gasping state determination method according to the present invention has: a storage step of storing a vibration pattern that corresponds to a grip grasping state by a driver of a two-wheeled motor vehicle; an acquisition step of acquiring a signal from a grip sensor that is attached to a driving operation handlebar and detects vibration of a grip; a detection step of detecting, by a joint sensor, vibration of a connection section between the handlebar for the driver and a steering column supporting the handlebar for the driver; and a determination step of determining the grip grasping state by the driver on the basis of the vibration detected by the grip sensor and the vibration pattern, and the vibration detected by the joint sensor as a reference value.

In the grip grasping state determination device and the determination method according to the present invention, the grip grasping state is determined on the basis of the vibration of the grip and the vibration pattern corresponding to the grip grasping state, which is stored in advance. Therefore, it is possible to reduce a possibility of an erroneous determination, which is caused by a grip grasping position by the driver, the vibration from the engine, and the like and thereby accurately determine the grip grasping state of the driver.

### BRIEF DESCRIPTION OF THE DRAWINGS

Fig. 1 is a view illustrating an example of a mounted state of a grip grasping state determination device and a system including such a determination device to a two-wheeled motor vehicle or the like.
Fig. 2 is a diagram illustrating an exemplary system configuration of a warning system.
Fig. 3 is a diagram illustrating an exemplary system configuration of a power steering control system.
Fig. 4 is a diagram illustrating an exemplary system configuration of an automated emergency brake control system.
Figs. 5A and 5B are graphs illustrating examples of a vibration pattern.
Fig. 6 is a chart illustrating an operation flow of the grip grasping state determination device.
Fig. 7 is a chart illustrating an operation flow of a machine learning section.
Fig. 8 is a chart illustrating an operation flow of the warning system.
Fig. 9 is a chart illustrating an operation flow of the power steering control system.
Fig. 10 is a chart illustrating an operation flow of the automated emergency brake control system.

### DETAILED DESCRIPTION OF THE INVENTION

A description will hereinafter be made on a grip grasping state determination device according to the present invention, a system including the determination device, and a determination method therefor with reference to the drawings.

A configuration, operation, and the like, which will be described below, merely constitute one example. The device, the system, and the determination method according to the present invention are not limited to a case with such a configuration, such operation, and the like.

For example, a description will hereinafter be made on a case where a two-wheeled motor vehicle is a motorcycle. However, the two-wheeled motor vehicle may be a scooter or an electric motorcycle.

The same or similar description will appropriately be simplified or will not be made below. In the drawings, the same or similar portions will be denoted by the same reference sign. A detailed structure will appropriately be illustrated in a simplified manner or will not be illustrated.

### <Configuration of Each of Grip Grasping State Determination Device and System Including Device>

A description will be made on a configuration of a grip grasping state determination device 1.

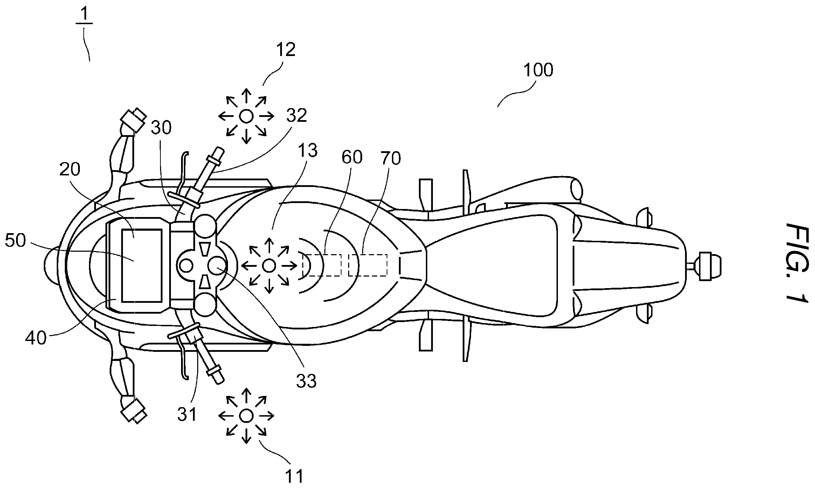

Fig. 1 is a view illustrating a mounted state of the grip grasping state determination device 1 according to a first embodiment of the present invention and a system including the same to the two-wheeled motor vehicle.

As illustrated in Fig. 1, the grip grasping state determination device 1 is mounted to at least a two-wheeled motor vehicle 100, and includes: a left grip sensor 11 that detects vibration of a left grip 31; a right grip sensor 12 that detects vibration of a right grip 32; and a processing unit 20 that is installed in a control panel 40. Hereinafter, the left grip sensor 11 and the right grip sensor 12 will collectively be referred to as grip sensors 11, 12. In addition, the grip grasping state determination device 1 may selectively be provided with a joint sensor 13 that detects vibration of a connection section between a driver handlebar 30 and a steering shaft (not illustrated) for supporting the driver handlebar 30.

The grip sensors 11, 12 are sensors that respectively detect the vibration of the grips 31, 32, and the sensors for detecting the vibration are of a contact type and a non-contact type. As the contact type sensor, a piezoelectric sensor of a type detecting acceleration is used. As the non-contact type sensor, a laser Doppler sensor of a type detecting a speed or a capacitance sensor of a type detecting displacement is used. Any of all of these sensors can be applied to the present invention. However, the acceleration detection sensor capable of covering a wide frequency range is further preferred. In the embodiment of the present invention, a grip sensor including a three-axis gyroscope sensor and a three-directional acceleration sensor is adopted.

Similar to the grip sensors 11, 12, the joint sensor 13 preferably includes the three-axis gyroscope sensor and the three-directional acceleration sensor, and outputs detected inertia to the processing unit 20.

Each of the grip sensors 11, 12 can communicate an electrical signal with the processing unit 20 by wired connection or wireless communication such as Bluetooth^{®}.

The grip sensors 11, 12 are each attached to a grip position of the handlebar 30, for example. Preferably, the grip sensors 11, 12 are each attached to an end portion of the handlebar 30. The end portion of the handlebar 30 is a portion where a vibration amplitude is the largest. Thus, a change in the vibration caused by a grip grasping state of a driver can further easily be detected in such a portion.

The joint sensor 13 is attached to a connection section 33 between the handlebar 30 and a steering column. Vibration in this connection section 33 is not affected by the grip grasping state of the driver. Accordingly, in order to determine the grasping state of the grip by the driver, the vibration detected by the joint sensor 13 is used as a reference value, and thus detection accuracy of the vibration of the grip can be improved. As long as the connection section is not affected by the grip grasping state of the driver, the connection section does not have to be strictly the connection section between the handlebar 30 and the steering column. For example, in the case where the steering column is divided into two, a connection section between the handlebar 30 and each of two divided portions of the steering column is also included as the connection section in the present invention.

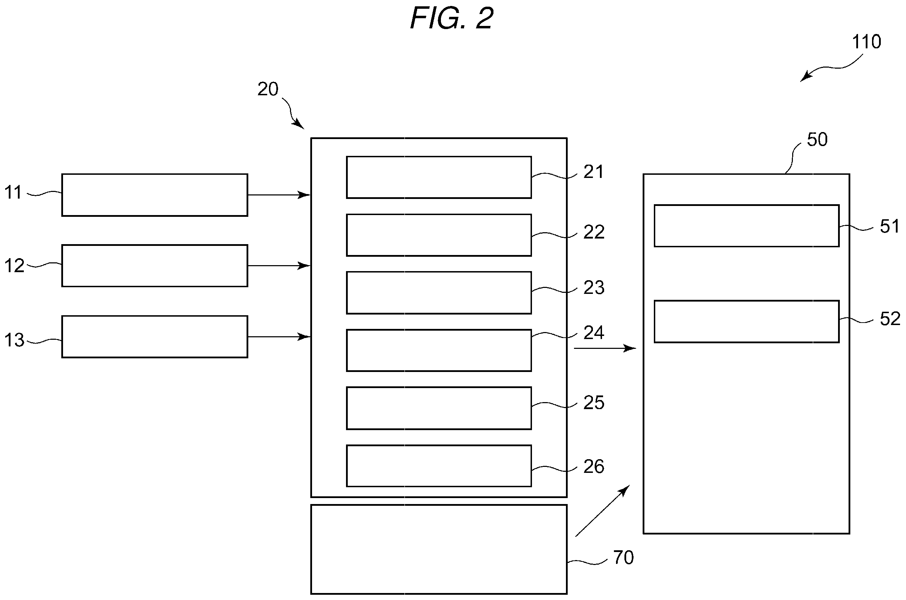

Next, a description will be made on a configuration of the processing unit 20 in the grip grasping state determination device 1 and the system including such a device with reference to Fig. 2 to Fig. 4.

The processing unit 20 includes an acquisition section 21, a calculation section 22, a determination section 23, a communication section 24, a machine learning section 25, and a storage section 26. The sections of the processing unit 20 may collectively be provided in a single casing or may separately be provided in multiple casings. In Fig. 1, the processing unit 20 is accommodated in the control panel 40. However, the processing unit 20 may be accommodated in a steering controller 60 or an automated brake controller 70, for example. The processing unit 20 may partially or entirely be constructed of a microcomputer, a microprocessor unit, or the like, may be constructed of one whose firmware and the like can be updated, or may be a program module or the like that is executed by a command from a CPU or the like, for example.

The acquisition section 21 acquires, from the grip sensors 11, 12, measurement values of the vibration of the grips 31, 32. In addition, the acquisition section 21 acquires, from the joint sensor 13, a measurement value of the vibration of the connection section 33.

The calculation section 22 plots the vibration-related measurement values, which are acquired from the grip sensors 11, 12, by time and generates a vibration pattern in a certain specified period. The specified period may be fixed or may be variable.

Similarly, the calculation section 22 plots the vibration measurement values, which are acquired from the joint sensor 13, by time and generates a vibration profile in a certain specified period.

In the case where each of the grip sensors 11, 12 and the joint sensor 13 is the acceleration detection sensor, the calculation section 22 calculates displacement from time-series data of the acceleration, which is detected by the respective sensors, and generates a vibration pattern of time and displacement.

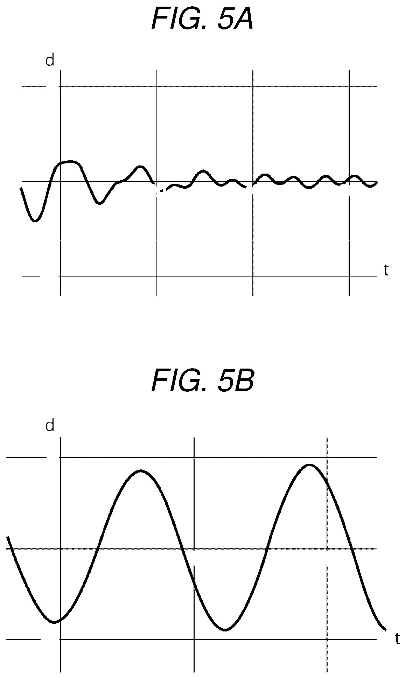

The determination section 23 determines the grip grasping state by the driver on the basis of the vibration of the grip, which is acquired by the acquisition section 21, and the vibration pattern, which is stored in the storage section 26 in advance and corresponds to the grip grasping state of the driver. As the vibration pattern, which is stored in advance, a grasping vibration pattern indicative of the state where the driver grasps the grip and a non-grasping vibration pattern indicative of a state where the driver does not grasp the grip may be prepared. Then, the grip grasping state by the driver may be determined by comparing a current vibration pattern of the grip, which is generated by the calculation section 22, and these vibration patterns. Alternatively, a displacement threshold value may be calculated from the vibration pattern, which is stored in advance. Then, the grip grasping state by the driver may be determined by comparing the displacement, which is calculated from the vibration of the grip acquired by the acquisition section 21, and the displacement threshold value. Figs. 5A and 5B illustrate the grasping vibration pattern (Fig. 5A) and the non-grasping vibration pattern (Fig. 5B) as examples.

The plural vibration patterns, each of which corresponds to the grasping state stored in advance, may be prepared according to a travel state of the two-wheeled motor vehicle (during normal travel, during curve travel, during brake operation, during a clutch operation, or the like).

In addition, a frequency characteristic with the vibration measurement value, which is acquired from the joint sensor 13, as an input value and the vibration measurement value, which is acquired from each of the grip sensors 11, 12, as an output value is analyzed. In this way, it is possible to improve determination accuracy of the grip grasping state by the driver.

The determination result includes any of determination results that the driver "grasps the grip" and "does not grasp the grip".

The communication section 24 acquires the determination result by the determination section 23 and sends the determination result to a warning transmitter 50, the steering controller 60, or the automated brake controller 70.

The machine learning section 25 selects one of plural machine learning models, and machine-learns a grip grasping state determination model by using the selected machine learning model, grip grasping information, and the vibration measurement value from the grip sensor that corresponds to the grip grasping information.

The above machine learning model may be any of models that can be used for machine learning of the grip grasping state determination model among the existing machine learning models. For example, the machine learning model may be a calculation model using a classification method, such as logistic regression, a support vector machine, a random forest, or a neighborhood method, a neural network, a Bayesian network, or the like. A processing flow by the machine learning section 25 will be described below.

The storage section 26 is a device for saving and storing data and programs, and at least stores a program that is executed by the calculation section 22, the measurement values by the various sensors, the vibration pattern, the machine learning model, and the like.

The warning transmitter 50, which is illustrated in Fig. 2, at least includes an acquisition section 51 and a warning control section 52. The acquisition section 51 receives the determination result by the determination section 23 from the communication section 24 and receives a signal from the automated brake controller 70. When the warning control section 52 receives, from the automated brake controller 70, a signal indicating that emergency braking is currently actuated, and acquires, from the communication section 24, a determination result of a state where any of the grips 31, 32 is not grasped by the driver, the warning control section 52 executes control for transmitting a warning to the driver. The warning may be a warning that is visually transmitted to the driver or a warning that is transmitted by sound via the control panel 40.

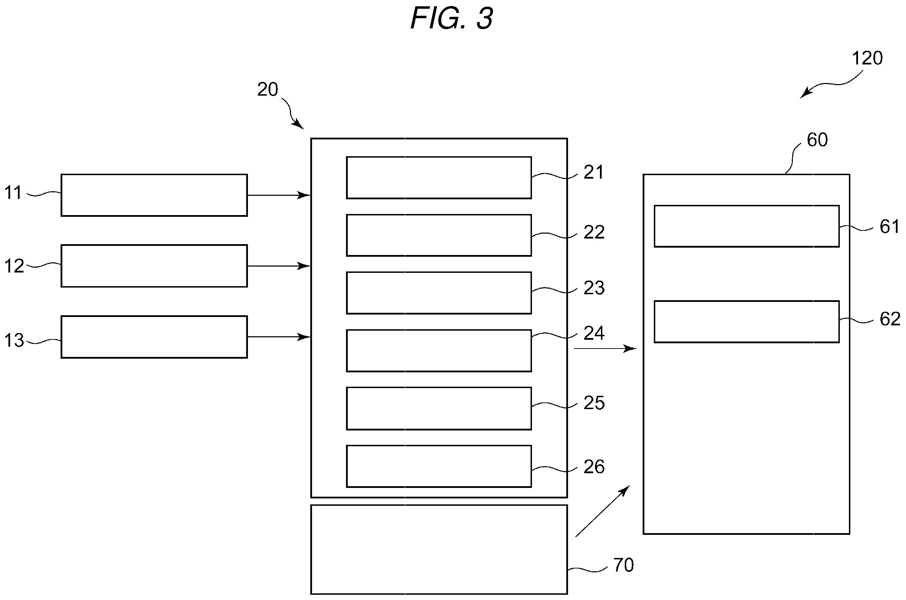

The steering controller 60, which is illustrated in Fig. 3, at least includes an acquisition section 61 and a damping control section 62.

The acquisition section 61 receives the determination result by the determination section 23 from the communication section 24 and receives the signal from the automated brake controller 70. When the damping control section 62 receives, from the automated brake controller 70, the signal indicating that the emergency braking is currently actuated, and acquires, from the communication section 24, the determination result of the state where any of the grips 31, 32 is not grasped by the driver, the damping control section 62 changes steering damping control. More specifically, the damping control section 62 executes control for increasing steering torque. In this way, even in the state where the driver does not grasp the grip, it is possible to prevent a rapid change in steering by the emergency braking.

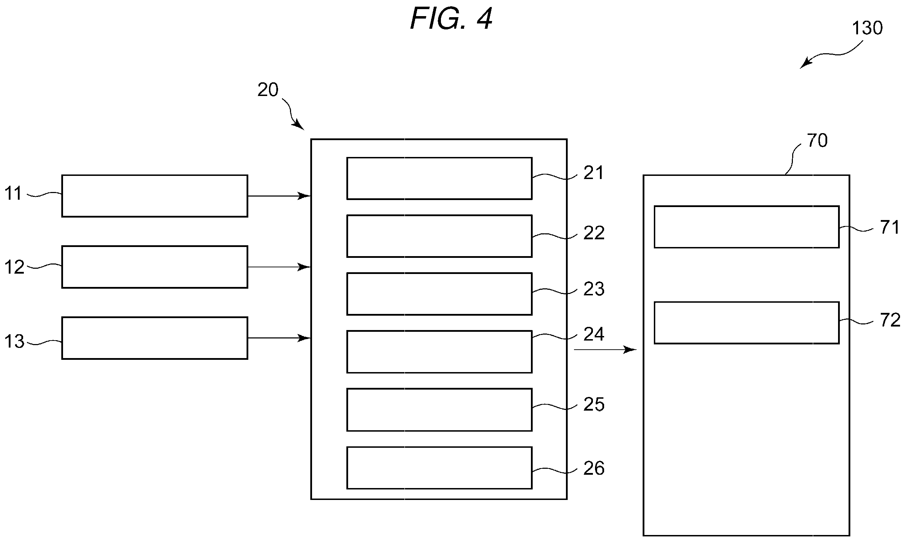

The automated brake controller 70, which is illustrated in Fig. 4, at least includes an acquisition section 71 and a brake control section 72.

The acquisition section 71 receives the determination result by the determination section 23 from the communication section 24. When the automated brake controller 70 determines that the emergency braking is currently actuated, and the brake control section 72 acquires, from the communication section 24, the determination result of the state where any of the grips 31, 32 is not grasped by the driver, the brake control section 72 changes brake control during execution of automated emergency brake control for the two-wheeled motor vehicle. More specifically, the brake control section 72 executes control for restricting brake torque to be lower than the brake torque during actuation of the normal emergency braking. In this way, even when the emergency braking is actuated in the state where the driver does not grasp the grip, it is possible to reduce a chance of a state where steering becomes unstable.

As another example, the automated brake controller 70 may execute the control for restricting the brake torque only for a specified period in comparison with the brake torque during the actuation of the normal emergency braking. In this way, it is possible to provide the driver with a time margin for grasping the grip before the steering becomes unstable due to initiation of the actuation of the emergency braking.

### <Operation of Grip Grasping State Determination Device>

Next, a description will be made on operation of the grip grasping state determination device 1.

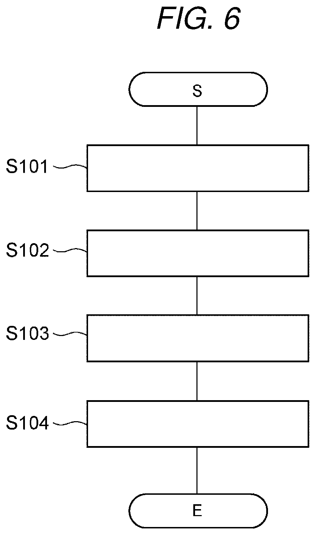

Fig. 6 is a chart illustrating an operation flow of the grip grasping state determination device 1 according to the embodiment of the present invention.

### (Storage Step)

In step S101, the storage section 26 stores the vibration pattern that corresponds to the grasping state of the left grip 31 by the driver. More specifically, the calculation section 22 calculates the displacement on the basis of the time-series data of the acceleration of the left grip 31, which is acquired from the left grip sensor 11. Then, the storage section 26 stores the vibration pattern in which the displacement is plotted by time.

Similarly, the storage section 26 stores the vibration pattern that corresponds to the grasping state of the right grip 32 by the driver. More specifically, the calculation section 22 calculates the displacement on the basis of the time-series data of the acceleration of the right grip 32, which is acquired from the right grip sensor 12. Then, the storage section 26 stores the vibration pattern in which the displacement is plotted by time.

### (Acquisition Step)

In step S102, the acquisition section 21 acquires the current vibration measurement value that is detected by the left grip sensor 11. More specifically, the acquisition section 21 acquires the measurement value of the acceleration of the left grip 31, which is acquired from the left grip sensor 11.

Similarly, the acquisition section 21 acquires the current vibration measurement value that is detected by the right grip sensor 12. More specifically, the acquisition section 21 acquires the measurement value of the acceleration of the right grip 32, which is acquired from the right grip sensor 12

### (Determination Step)

In step S103, the determination section 23 determines the grip grasping state by the driver on the basis of the vibration detected by the grip sensors 11, 12 and the vibration patterns.

More specifically, the determination section 23 determines the grip grasping state by the driver by comparing the vibration pattern, which is stored in the storage section 26 in step S101, with the vibration measurement value, which is acquired by the acquisition section 21 in step S102. In the case where the acquired vibration matches or approximates the grasping vibration pattern, it is determined that the driver grasps the grip. On the other hand, in the case where acquired vibration matches or approximates the non-grasping vibration pattern, it is determined that the driver does not grasp the grip.

As another example, the displacement threshold value may be calculated from the vibration pattern, which is stored in step S101. Then, in the case where the displacement, which is calculated from the time-series data of the acceleration acquired in step S102, falls below the displacement threshold value, that is, in the case where average displacement in the specified period is smaller than the displacement threshold value, it may be determined that the driver grasps the grip.

### (Communication Step)

When the grip grasping state by the driver is determined in step S103, in step S104, the communication section 24 sends the determination result to each of the systems.

In this example, the determination result is sent to the systems regardless of whether the driver grasps the grip. However, the determination result may be sent to the systems only in the case where it is determined that the driver does not grasp the grip.

### <Effects of Grip Grasping State Determination Device>

Next, a description will be made on effects of the grip grasping state determination device according to the embodiment.

The grip grasping state determination device has: the grip sensor that is attached to the driving operation handlebar for the two-wheeled motor vehicle and detects the vibration of the grip grasped by the driver of the two-wheeled motor vehicle; the storage section that stores the vibration pattern corresponding to the grip grasping state by the driver; and the determination section that determines the grip grasping state by the driver on the basis of the vibration detected by the grip sensor and the vibration profile. Accordingly, it is possible to accurately determine the grasping state without relying on the grip grasping position by the driver, the driver's grip grasping habit, or the like. In addition, in order to determine the grasping state by the pressure sensor as in the related art, the pressure sensor has to be arranged accurately to the grip grasping position by the driver. However, since the grip grasping state determination device according to the present invention uses the change in the vibration of the grip according to the grasping state by the driver, the arrangement position of the sensor is not limited to the grasping position by the driver. Therefore, it is possible to improve a degree of freedom in the arrangement of the sensor.

### <Operation of Machine Learning Section>

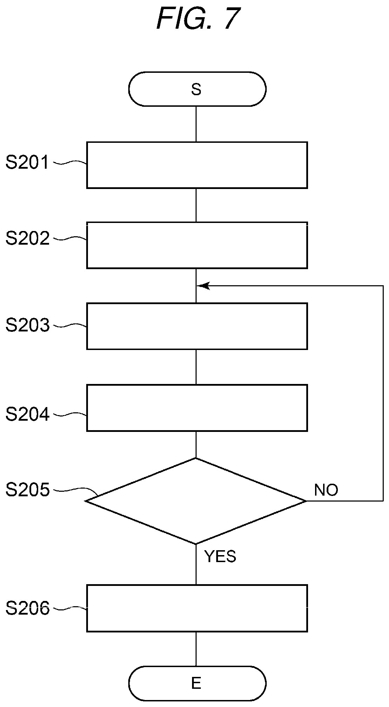

Next, a description will be made on operation of the machine learning section in the grip grasping state determination device with reference to Fig. 7. Fig. 7 is a flowchart schematically illustrating an example of machine learning processing by the grip grasping state determination device according to the embodiment of the present invention.

In step S201, the grip grasping state determination device 1 acquires the grip grasping information and the vibration measurement value from the grip sensor, which corresponds to the grip grasping information. More specifically, the machine learning section 25 acquires the vibration measurement values that are accumulated in the storage section 26. In the grip grasping information, it may be determined that the grip is grasped when a throttle opening amount is detected, for example. This is because, in a state where the throttle opening amount is detected, it is understood that the driver at least grasps the grip on an accelerator side.

In step S202, the grip grasping state determination device 1 acquires the existing grip grasping state determination model. More specifically, the machine learning section 25 acquires the grip grasping state determination models that are accumulated in the storage section 26.

Next, the grip grasping state determination device 1 updates the grip grasping state determination model by using the grip grasping information and the vibration measurement value from the grip sensor (step S203). More specifically, the machine learning section 25 selects one of the plural machine learning models. Then, the machine learning section 25 machine-learns the grip grasping state determination model by using the selected machine learning model, the grip grasping information, and the vibration measurement value from the grip sensor, which corresponds to the grip grasping information.

Next, the grip grasping state determination device 1 calculates accuracy of the updated grip grasping state determination model (step S204). More specifically, the machine learning section 25 inputs test input data to the new grip grasping state determination model, which is acquired by the machine learning, and compares an output value with test output data, so as to calculate the accuracy of the model.

If the calculated value is equal to or larger than a threshold value (step S205/Y), the grip grasping state determination device 1 stores the updated grip grasping state determination model (step S206). More specifically, in the case where the calculated accuracy is equal to or higher than the threshold value, the machine learning section 25 stores the new grip grasping state determination model in the storage section 26. If the calculated value is smaller than the threshold value (step S205/N), the processing returns to step S203.

A description will hereinafter be made on an operation flow of a warning system.

### <Operation of Warning System>

A description will be made on operation of a warning system 110 according to the embodiment.

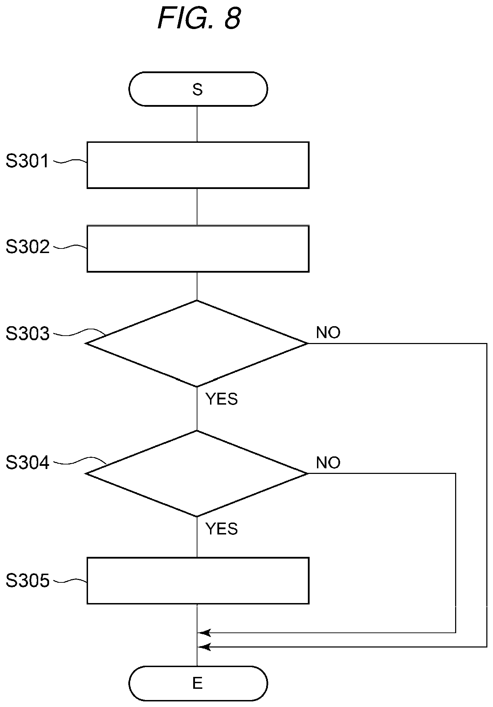

Fig. 8 is a chart illustrating an operation flow of the warning system 110 according to the embodiment of the present invention.

### (Acquisition Step)

In step S301, the acquisition section 51 acquires the determination result that is determined by the grip grasping state determination device 1. More specifically, the acquisition section 51 acquires the determination result that "the grip is grasped" or "the grip is not grasped". Such a determination result is the result of the determination that is made in step S103 of the operation flow by the grip grasping state determination device 1.

Then, in step S302, the acquisition section 51 acquires, from the automated brake controller 70, information on whether the automated emergency brake control is currently executed.

### (Determination Step)

In step S303, a determination section (not illustrated) determines whether the determination result, which is acquired from the processing unit 20, corresponds to that "the grip is not grasped". If the determination result corresponds to that "the grip is not grasped" (YES), the processing proceeds to step S304. If the determination result does not correspond to that "the grip is not grasped" (NO), the processing is terminated.

In step S304, the determination section (not illustrated) determines whether the signal acquired from the automated brake controller 70 corresponds to that "the emergency braking is currently actuated". If the determination result corresponds to that "the emergency braking is currently actuated" (YES), the processing proceeds to step S305. If the determination result does not correspond to that "the emergency braking is currently actuated" (NO), the processing is terminated.

Here, in the case where the determination result that the grip is not grasped is only acquired from the grip grasping state determination device 1 in step S301, step S303 can be omitted.

Similarly, in the case where, in step S302, the signal is acquired from the automated brake controller 70 only when the emergency braking is actuated, step S304 can be omitted.

### (Warning Transmission Step)

In step S305, the warning control section 52 of the warning transmitter 50 executes the control for transmitting the warning to the driver. The warning may be transmitted to the driver via a screen of the control panel 40 or may be transmitted to the driver in the form of warning sound from a speaker, which is attached to a smart helmet, via the wireless communication.

### <Effects of Warning System>

A description will be made on effects of the warning system.

The warning system includes the warning transmitter that transmits the warning to the driver according to the determination result by the determination section of the grip grasping state determination device 1. Accordingly, in the case where the driver drives the two-wheeled motor vehicle with one hand at the time when the automated emergency braking is actuated, the warning is transmitted to the driver. As a result, the driver can grasp the grips with both of his/her hands on the basis of the warning.

### <Operation of Power Steering Control System>

A description will be made on a power steering control system 120.

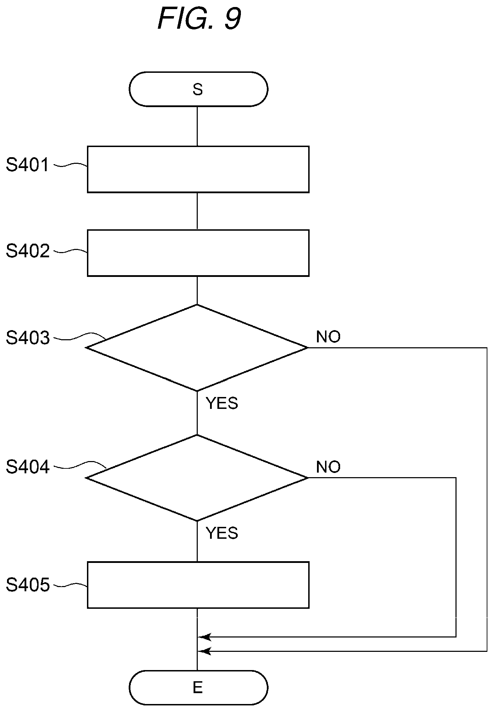

Fig. 9 is a chart illustrating an operation flow of the steering controller 60 according to the embodiment of the present invention.

The power steering control system 120 executes the operation flow illustrated in Fig. 9. Here, step S401 to step S404 are the same as step S301 to step S304 in the operation flow of the warning system 110. Thus, a description thereon will not be made.

### (Damping Control Step)

In step S405, the steering controller 60 changes steering damping control. More specifically, the steering controller 60 executes control for increasing damping torque. As a result, rotational torque of the steering is increased. Thus, the handlebar is stabilized.

### <Effects of Power Steering Control System>

A description will be made on effects of the power steering control system 120.

According to the embodiment, the steering controller 60 changes the steering damping control during the execution of the automated emergency brake control for the two-wheeled motor vehicle according to the determination result by the determination section of the grip grasping state determination device 1. Accordingly, in the case where the driver drives the two-wheeled motor vehicle with one hand when the automated emergency braking is actuated, the steering controller executes the control for increasing the damping torque of the steering. Therefore, it is possible to stabilize a handlebar operation during the actuation of the automated emergency braking.

### <Operation of Automated Brake Controller>

A description will be made on operation of an automated emergency brake control system 130.

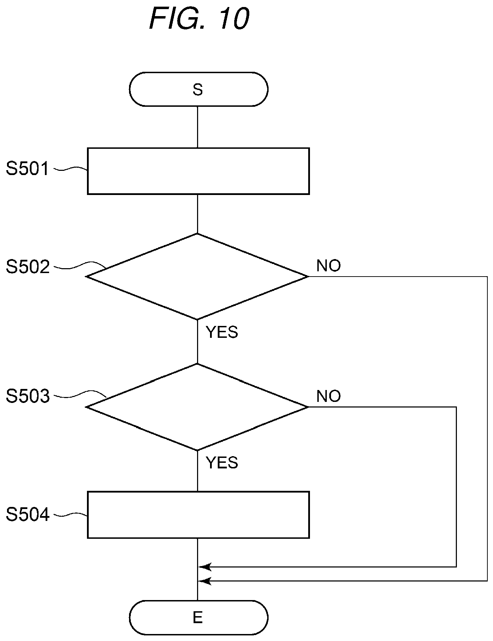

Fig. 10 is a chart illustrating an operation flow of the automated emergency brake control system 130 according to the embodiment of the present invention.

The automated emergency brake control system 130 executes the operation flow illustrated in Fig. 10.

### (Acquisition Step)

In step S501, the acquisition section 71 acquires the result of the determination that is made by the processing unit 20. More specifically, the acquisition section 71 acquires the determination result that "the grip is grasped" or "the grip is not grasped". Such a determination result is the result of the determination that is made in step S104 by the processing unit 20.

### (Determination Step)

In step S502, the determination section (not illustrated) determines whether the determination result, which is acquired from the grip grasping state determination device 1, corresponds to that "the grip is not grasped". If the determination result corresponds to that "the grip is not grasped" (YES), the processing proceeds to step S503. If the determination result does not correspond to that "the grip is not grasped" (NO), the processing is terminated.

In step S503, the automated brake controller 70 determines whether the emergency braking is currently actuated. If the determination result corresponds to that "the emergency braking is currently actuated" (YES), the processing proceeds to step S504. If the determination result does not correspond to that "the emergency braking is currently actuated" (NO), the processing is terminated. Here, in the case where the determination result that "the grip is not grasped" is only acquired from the grip grasping state determination device 1 in step S501, step S502 can be omitted.

### (Brake Control Step)

In step S504, the brake control section 72 changes the brake control. More specifically, the brake control section 72 executes control for reducing the brake torque to be lower than the brake torque during the actuation of the normal automated emergency braking. In further another example, the brake control section 72 can also execute control for reducing the brake torque only for the specified period in comparison with the brake torque during the execution of the normal emergency brake control.

### <Effects of Automated Emergency Brake Control System>

A description will be made on effects of the automated emergency brake control system 130.

According to the embodiment, the automated brake controller changes the brake control during the execution of the automated emergency brake control for the two-wheeled motor vehicle according to the determination result by the determination section of the grip grasping state determination device. Accordingly, even in the case where the automated emergency braking is actuated when the driver drives the two-wheeled motor vehicle with one hand, the automated brake controller executes the control for reducing the brake torque to be lower than the brake torque during the actuation of the normal automated emergency braking. Therefore, it is possible to reduce a chance of the steering from becoming unstable. In addition, as another example, the automated brake controller can also execute the control for reducing the brake torque only for the specified period in comparison with that in the normal emergency brake control. In this way, it is possible to provide the driver with the time margin for grasping the grip before the steering becomes unstable.

The description has been made so far on the embodiment of the present invention. However, the present invention is not limited to the description of the embodiment. For example, modifications are possible within the scope of the invention as defined by the appended claims.

## Claims

1. A grip grasping state determination device (1) comprising:
a grip sensor (11, 12) attached to a driving operation handlebar (30) of a two-wheeled motor vehicle (100) and detecting vibration of a grip (31, 32) grasped by a driver of the two-wheeled motor vehicle;
a joint sensor (13) detecting vibration of a connection section between the handlebar for the driver and a steering column supporting the handlebar for the driver;
a storage section (26) storing a vibration pattern corresponding to a grasping state of the grip by the driver; and
a determination section (23) determining the grasping state of the grip by the driver on the basis of the vibration detected by the grip sensor, the vibration pattern, and the vibration detected by the joint sensor (13) as a reference value.

2. The grip grasping state determination device (1) according to claim 1, wherein
the grip sensor is attached to an end portion of the driving operation handlebar.

3. The grip grasping state determination device (1) according to claim 1 or 2, wherein
the grip sensor is a three-axis acceleration sensor.

4. The grip grasping state determination device (1) according to claim 1, wherein
the joint sensor is a three-axis acceleration sensor.

5. The grip grasping state determination device (1) according to any one of claims 1 to 4 further comprising:
a machine learning section (25) configured to learn a grip grasping state determination model with vibration as an input value on the basis of grip grasping information and the vibration from the grip sensor corresponding to the grip grasping information.

6. A warning system (110) comprising:
a grip grasping state determination device according to any one of claims 1 to 5,
a warning transmitter (50) configured to transmit a warning to the driver according to a determination result by the determination section of the grip grasping state determination device.

7. A power steering control system (120) comprising:
a grip grasping state determination device according to any one of claims 1 to 5,
a steering controller (60) configured to change steering damping control during execution of automated emergency brake control for the two-wheeled motor vehicle according to a determination result by the determination section of the grip grasping state determination device.

8. An automated emergency brake control system (130) comprising:
a grip grasping state determination device according to any one of claims 1 to 5,
an automated brake controller (60) that changes brake control during execution of automated emergency brake control for the two-wheeled motor vehicle according to a determination result by the determination section of the grip grasping state determination device.

9. A grip grasping state determination method comprising:
a storage step of storing a vibration pattern that corresponds to a grasping state of a grip by a driver of a two-wheeled motor vehicle;
an acquisition step of acquiring a signal from a grip sensor that is attached to a driving operation handlebar and detects vibration of the grip;
a detection step of detecting, by a joint sensor, vibration of a connection section between the handlebar for the driver and a steering column supporting the handlebar for the driver; and
a determination step of determining the grasping state of the grip by the driver on the basis of the vibration detected by the grip sensor, the vibration pattern, and the vibration detected by the joint sensor as a reference value.

10. The grip grasping state determination method according to claim 9, wherein
the grip sensor is a three-axis acceleration sensor, and
in the determination step, displacement is calculated from time-series data of acceleration that is detected by the three-axis acceleration sensor, and the grasping state of the grip is determined by comparing the displacement with a displacement threshold value that is acquired from the vibration pattern.

## Patentansprüche

1. Griffgreifzustandsbestimmungsvorrichtung (1), die Folgendes umfasst:
einen Griffsensor (11, 12), der an einem Fahrbedienungslenker (30) eines zweirädrigen Kraftfahrzeugs (100) befestigt ist und eine Vibration eines Griffs (31, 32) detektiert, der durch einen Fahrer des zweirädrigen Kraftfahrzeugs ergriffen wird;
einen Verbindungsstellensensor (13), der eine Vibration eines Verbindungsabschnitts zwischen dem Lenker für den Fahrer und einer Lenksäule, die den Lenker für den Fahrer trägt, detektiert;
einen Speicherabschnitt (26), der ein Vibrationsmuster speichert, das einem Greifzustand des Griffs durch den Fahrer entspricht; und
einen Bestimmungsabschnitt (23), der den Greifzustand des Griffs durch den Fahrer basierend auf der durch den Griffsensor detektierten Vibration, dem Vibrationsmuster und der durch den Verbindungsstellensensor (13) detektierten Vibration als einen Referenzwert bestimmt.

2. Griffgreifzustandsbestimmungsvorrichtung (1) nach Anspruch 1, wobei
der Griffsensor an einem Endabschnitt des Fahrbedienungslenkers befestigt ist.

3. Griffgreifzustandsbestimmungsvorrichtung (1) nach Anspruch 1 oder 2, wobei
der Griffsensor ein dreiachsiger Beschleunigungssensor ist.

4. Griffgreifzustandsbestimmungsvorrichtung (1) nach Anspruch 1, wobei
der Verbindungsstellensensor ein dreiachsiger Beschleunigungssensor ist.

5. Griffgreifzustandsbestimmungsvorrichtung (1) nach einem der Ansprüche 1 bis 4, die ferner Folgendes umfasst:
einen Maschinenlernabschnitt (25), der dazu ausgelegt ist, ein Griffgreifzustandsbestimmungsmodell mit Vibration als einen Eingangswert basierend auf Griffgreifinformationen und der Vibration von dem Griffsensor, die den Griffgreifinformationen entspricht, zu erlernen.

6. Warnsystem (110), das Folgendes umfasst:
eine Griffgreifzustandsbestimmungsvorrichtung nach einem der Ansprüche 1 bis 5,
einen Warnungssender (50), der dazu ausgelegt ist, eine Warnung an den Fahrer gemäß einem Bestimmungsergebnis durch den Bestimmungsabschnitt der Griffgreifzustandsbestimmungsvorrichtung zu senden.

7. Servolenkungssteuersystem (120), das Folgendes umfasst:
eine Griffgreifzustandsbestimmungsvorrichtung nach einem der Ansprüche 1 bis 5,
eine Lenkungssteuerung (60), die dazu ausgelegt ist, eine Lenkungsdämpfungssteuerung während einer Ausführung einer automatisierten Notbremssteuerung für das zweirädrige Kraftfahrzeug gemäß einem Bestimmungsergebnis durch den Bestimmungsabschnitt der Griffgreifzustandsbestimmungsvorrichtung zu ändern.

8. Automatisiertes Notbremssteuersystem (130), das Folgendes umfasst:
eine Griffgreifzustandsbestimmungsvorrichtung nach einem der Ansprüche 1 bis 5,
eine automatisierte Bremssteuerung (60), die eine Bremssteuerung während einer Ausführung einer automatisierten Notbremssteuerung für das zweirädrige Kraftfahrzeug gemäß einem Bestimmungsergebnis durch den Bestimmungsabschnitt der Griffgreifzustandsbestimmungsvorrichtung ändert.

9. Griffgreifzustandsbestimmungsverfahren, das Folgendes umfasst:
einen Speicherschritt zum Speichern eines Vibrationsmusters, das einem Greifzustand eines Griffs durch einen Fahrer eines zweirädrigen Kraftfahrzeugs entspricht;
einen Erfassungsschritt zum Erfassen eines Signals von einem Griffsensor, der an einem Fahrbedienungslenker befestigt ist und eine Vibration des Griffs detektiert;
einen Detektionsschritt zum Detektieren, durch einen Verbindungsstellensensor, einer Vibration eines Verbindungsabschnitts zwischen dem Lenker für den Fahrer und einer Lenksäule, die den Lenker für den Fahrer trägt; und
einen Bestimmungsschritt zum Bestimmen des Greifzustands des Griffs durch den Fahrer basierend auf der durch den Griffsensor detektierten Vibration, dem Vibrationsmuster und der durch den Verbindungsstellensensor detektierten Vibration als einen Referenzwert.

10. Griffgreifzustandsbestimmungsverfahren nach Anspruch 9, wobei
der Griffsensor ein dreiachsiger Beschleunigungssensor ist, und
in dem Bestimmungsschritt eine Verschiebung aus Zeitreihendaten einer Beschleunigung berechnet wird, die durch den dreiachsigen Beschleunigungssensor detektiert wird, und der Greifzustand des Griffs durch Vergleichen der Verschiebung mit einem Verschiebungsschwellenwert bestimmt wird, der aus dem Vibrationsmuster erfasst wird.

## Revendications

1. Dispositif de détermination d'état de tenue de poignée (1) comprenant :
un capteur de poignée (11, 12) attaché à un guidon (30) de fonctionnement de conduite d'un véhicule à moteur à deux roues (100) et détectant une vibration d'une poignée (31, 32) tenue par un conducteur du véhicule à moteur à deux roues ;
un capteur de jonction (13) détectant une vibration d'une section de connexion entre le guidon pour le conducteur et une colonne de direction supportant le guidon pour le conducteur ;
une section de stockage (26) stockant un motif de vibration correspondant à un état de tenue de la poignée par le conducteur ; et
une section de détermination (23) déterminant l'état de tenue de la poignée par le conducteur sur la base de la vibration détectée par le capteur de tenue, du motif de vibration, et de la vibration détectée par le capteur de jonction (13) en tant que valeur de référence.

2. Dispositif de détermination d'état de tenue de poignée (1) selon la revendication 1, dans lequel
le capteur de poignée est attaché à une portion d'extrémité du guidon de fonctionnement de conduite.

3. Dispositif de détermination d'état de tenue de poignée (1) selon la revendication 1 ou la revendication 2, dans lequel
le capteur de poignée est un capteur d'accélération à trois axes.

4. Dispositif de détermination d'état de tenue de poignée (1) selon la revendication 1, dans lequel
le capteur de jonction est un capteur d'accélération à trois axes.

5. Dispositif de détermination d'état de tenue de poignée (1) selon l'une quelconque des revendications 1 à 4, comprenant en outre :
une section d'apprentissage automatique (25) configurée pour apprendre un modèle de détermination d'état de tenue de poignée avec une vibration en tant que valeur d'entrée sur la base d'informations de tenue de poignée et du fait que la vibration provenant du capteur de poignée correspond aux informations de tenue de poignée.

6. Système d'avertissement (110) comprenant :
un dispositif de détermination d'état de tenue de poignée selon l'une quelconque des revendications 1 à 5,
un transmetteur d'avertissement (50) configuré pour transmettre un avertissement au conducteur en fonction d'un résultat de détermination par la section de détermination du dispositif de détermination d'état de tenue de poignée.

7. Système de commande de direction assistée (120) comprenant :
un dispositif de détermination d'état de tenue de poignée selon l'une quelconque des revendications 1 à 5,
un dispositif de commande de direction (60) configuré pour changer la commande d'amortissement de direction pendant l'exécution d'une commande de frein d'urgence automatisé pour le véhicule à moteur à deux roues en fonction d'un résultat de détermination par la section de détermination du dispositif de détermination d'état de tenue de poignée.

8. Système de commande de frein d'urgence automatisé (130) comprenant :
un dispositif de détermination d'état de tenue de poignée selon l'une quelconque des revendications 1 à 5,
un dispositif de commande de frein automatisé (60) qui change la commande de frein pendant l'exécution d'une commande de frein d'urgence automatisé pour le véhicule à moteur à deux roues en fonction d'un résultat de détermination par la section de détermination du dispositif de détermination d'état de tenue de poignée.

9. Procédé de détermination d'état de tenue de poignée comprenant :
une étape de stockage d'un motif de vibration qui correspond à un état de tenue d'une poignée par un conducteur d'un véhicule à moteur à deux roues ;
une étape d'acquisition consistant à acquérir un signal provenant d'un capteur de préhension qui est attaché à un guidon de fonctionnement de conduite et détecte une vibration de la poignée ;
une étape de détection consistant à détecter, par un capteur de jonction, une vibration d'une section de liaison entre le guidon pour le conducteur et une colonne de direction supportant le guidon pour le conducteur ; et
une étape de détermination consistant à déterminer l'état de tenue de la poignée par le conducteur sur la base de la vibration détectée par le capteur de tenue, du motif de vibration, et de la vibration détectée par le capteur de jonction en tant que valeur de référence.

10. Procédé de détermination d'état de tenue de poignée selon la revendication 9, dans lequel
le capteur de poignée est un capteur d'accélération à trois axes, et
à l'étape de détermination, un déplacement est calculé à partir de données chronologiques d'accélération qui sont détectées par le capteur d'accélération à trois axes, et l'état de tenue de la poignée est déterminé par comparaison du déplacement avec une valeur seuil de déplacement qui est acquise à partir du motif de vibration.
